# EUROPÄISCHE PATENTANMELDUNG

(11) **EP 3 339 006 A1**
(43) Veröffentlichungstag der Anmeldung: **27.06.2018**
(21) Anmeldenummer: 17209211.6
(22) Anmeldetag: 21.12.2017
(51) Int. Cl.: B29C 65/20, B29L 12/00, B29L 31/10

(54) **VERFAHREN UND VORRICHTUNG ZUM VERBINDEN VON KUNSTSTOFFPROFILTEILEN**

(30) Priorität: 22.12.2016 DE 102016125483
(71) Anmelder: Rotox Besitz- und Verwaltungsgesellschaft mbH, 65611 Brechen (DE)
(72) Erfinder:
(74) Vertreter: Müller, Eckhard

(57) **Zusammenfassung**

Die Erfindung betrifft das Verbinden von Kunststoffprofilteilen, bei dem wenigstens ein Profilteil (15,16) und eine Heizfläche eines Heizelementes (8) eines Schweißapparats (7) miteinander in Kontakt gebracht werden, um das wenigstens eine Profilteil (15, 16) in seinem Schweißbereich vor einem Zusammenfügen mit dem anderen Profilteil (15, 16) anzuschmelzen, wobei wenigstens ein Formelement (9, 11) aus einer Ausgangsstellung in Richtung zu einer Arbeitsstellung relativ zu dem zumindest einen Profilteil (15, 16) bewegt wird, um ein Fließen und Verformen von Schmelzgut in dem Schweißbereich zu kontrollieren. Um Schweißwülste bei dem Verfahren zu vermeiden, so dass ein Nacharbeiten mit Werkzeugen völlig oder zumindest teilweise entfallen kann, schlägt die Erfindung vor, dass das wenigstens eine Formelement (9, 11) mit dem Schweißapparat (7) verbunden ist oder Teil des Schweißapparats (7), wobei das wenigstens eine Formelement (9, 11) in der Arbeitsstellung mit dem zumindest einen Profilteil (15, 16), insbesondere dem Schmelzgut in dem Schweißbereich in Kontakt bringbar ist.

## Beschreibung

Die Erfindung betrifft ein Verfahren zum Verbinden von Kunststoffprofilteilen mit den Merkmalen des Oberbegriffs von Anspruch 1, wobei wenigstens ein Profilteil und eine Heizfläche eines Schweißapparates miteinander in Kontakt gebracht werden, um das wenigstens eine Profilteil in einem Schweißbereich vor einem Zusammenfügen mit dem anderen Profilteil anzuschmelzen, wobei wenigstens ein Formelement aus einer Ausgangsstellung in Richtung zu einer Arbeitsstellung relativ zu dem zumindest einen Profilteil bewegt wird, um ein Fließen und Verformen von Schmelzgut in dem Schweißbereich zu kontrollieren.

Zudem betrifft die Erfindung auch eine Vorrichtung mit den Merkmalen des Oberbegriffs von Anspruch 12, welche zur Durchführung des Verfahrens eingerichtet sein kann.

Verfahren und Vorrichtungen in der eingangs genannten Art sind beispielsweise aus der DE 10 2015 107 121 A1 bekannt und werden insbesondere zum Verschweißen von PVC-Profilstäben zu Fensterrahmen oder Türrahmen verwendet. Hierzu werden die Profilstäbe vor dem Verschweißen auf jeweils erforderliche Längen abgelängt und, sofern erforderlich, auf Gehrung geschnitten, um die Profilteile anschließend an den Schnittflächen, also an den Gehrungsschnittflächen, durch Verschweißen zu verbinden.

Das eigentliche Verschweißen der Profilteile im Sinne der vorliegenden Erfindung erfolgt durch Anschmelzen und anschließendes Fügen der Verbindungsflächen an den Profilstabenden. Hierzu werden die zu verschweißenden Profilteile zunächst in eine entsprechende Spannvorrichtung eingelegt und mit Hilfe von Anschlägen und Führungen positioniert. Daraufhin wird der durch die Verbindungsflächen gebildete Schweißbereich für den sogenannten Angleich- und Anwärmprozess gegen die Heizfläche des Heizelementes eines Schweißapparats gedrückt, wobei Material des Profilteils an der Verbindungsfläche, also im Schweißbereich, geschmolzen wird. Nach dem Erwärmen erfolgt das Umstellen und Fügen, wobei das Heizelement zwischen den Profilteilen entfernt wird. Abschließend werden die Profilteile mit den angeschmolzenen Verbindungsflächen, also im angeschmolzenen Schweißbereich, in Fügerichtung aufeinander zubewegt und gegeneinander gepresst, wobei der noch heiße, vorzugsweise thermoplastische Werkstoff der beiden Profilstabenden nach dem Erkalten eine stabile Schweißverbindung bildet. Ein solches Vorgehen ist beispielsweise einleitend in der DE 10 2012 112 533 A1 erwähnt.

In der DE 10 2012 112 533 A1 finden auch Parallelschub- und Diagonalschubverfahren Erwähnung. Bei dem Parallelschubverfahren bewegen sich die anzuschmelzenden Gehrungs- bzw. Verbindungsflächen während des Schmelzprozesses von beiden Seiten gleichmäßig auf die Heizflächen des mittig feststehenden Heizelementes zu, wobei die Bewegung der Profilteile beispielsweise gegenläufig und senkrecht zu den Gehrungsschnittflächen oder senkrecht zur Längsachse des Profilteils erfolgen kann. Bei dem Diagonalschubverfahren dagegen ist eines der Profilteile feststehend positioniert, während das andere Profilteil als auch das Heizelement in Längsrichtung des feststehenden Profilteils bewegt wird.

Die Fügepartner selbst sind um den sogenannten Abbrand länger als das spätere Fertigmaß der verbundenen Elemente. Ein Teil des Abbrandes wird von dem Heizelement abgeschmolzen, ein anderer Teil wird in einem nächsten Schritt gefügt (gestaucht). Dieses Verhältnis des Abschmelzens und Stauchens des Abbrandes ist variabel. Auch der Abbrand selbst kann unterschiedlich sein.

Während des eigentlichen Abschmelzprozesses beginnt das Material des Profilteils, beispielsweise PVC, zu fließen und verformt sich. Hierbei bewegt sich die Schmelze auch nach außen über die Sichtfläche des Profilteils hinaus. Um dieses Fließen und Verformen nach außen über die Sichtflächen hinaus zu kontrollieren, wird das Profil bei bekannten Verfahren mit Begrenzungselementen, wie zum Beispiel Begrenzungsmessern, eingeengt und in der Möglichkeit, gegenüber der Sichtfläche hervorzustehen, begrenzt. Bei bekannten Vorrichtungen ist dieses Begrenzungselement jedoch bei dem Schweißprozess selbst unbeweglich mit den Profilträgern verbunden. Die Begrenzungselemente können selbstverengend eingestellt werden, jedoch kommen sie nicht in Kontakt mit dem Profilanschlag und dem Heizelement. Somit kann ein definierter Spalt verbleiben, in den die Schmelze fließen kann. Diese nach außen gedrückte Schmelze erstarrt im anschließenden Fügeprozess, so dass sich eine Schweißraupe bildet, die sich häufig farblich auch von den zusammengefügten Profilteilen abhebt, insbesondere wenn diese mit einem vom Grundmaterial abweichenden Dekor beschichtet sind. Nach einer gewissen Abkühlzeit muss diese Schweißraupe in einem weiteren Arbeitsschritt von einer Nachfolgemaschine, z.B. einer mit Fräsen und/oder Messern ausgestalteten, so genannten Putzmaschine, entfernt werden. Dies kann auf verschiedene Arten, wie durch Nuten oder ein bündiges Abstechen, geschehen.

Bei diesem vorbekannten Verfahren wird also die Schweißraupe entfernt, nachdem der Fügeprozess stattgefunden hat. Ein derartiges Entfernen der Schweißraupe nach dem Fügeprozess ist jedoch sowohl bei manuellem Vorgehen als auch bei maschinellen Vorgehen sehr zeit- und kostenintensiv. Bei Profilbauteilen die mit einem zusätzlichen Dekor an der Sichtfläche versehen sind, muss dann noch das im Bereich der entfernten Schweißraupe fehlende Dekor in einem zusätzlichen Arbeitsschritt nachgearbeitet oder ergänzt werden. Dadurch erhöhen sich Fertigungsaufwand und Fertigungskosten zusätzlich.

Aus der DE 10 2007 043 195 A1 sind ein Verfahren und eine Vorrichtung zum Verschweißen von Kunststoffprofilen mit bereits eingelegter Dichtung bekannt, wobei ein Verdrängungselement für eine Materialverdrängung vorgesehen ist.

Aus der DE 20 2015 000 908 U1 ist eine Vorrichtung zum Verschweißen zweier Kunststoffprofile, bestehend aus zwei für den Schweißvorgang in Pressrichtung relativ gegeneinander bewegbaren Spanneinheiten bekannt. Die Spanneinheiten nehmen jeweils zwischen einer unteren und oberen Begrenzungsplatte mit einer unter Gehrung verlaufenden Presskante ein Kunststoffprofil auf. Die Vorrichtung weist einen Schweißspiegel, das heißt ein Heizelement zum Anschmelzen des Kunststoffes auf. Die Presskante ist an einer getrennten, in einer stufenartigen Ausnehmung jeder Begrenzungsplatte befindlichen Leiste ausgebildet, wobei die Leiste in der Ausnehmung der Begrenzungsplatte senkrecht in Richtung der Presskante verschiebbar geführt ist. Die Presskante ragt in der Grundstellung der Leiste über die Vorderkante der Begrenzungsplatte hinaus und ist bei der Einleitung des Schweißvorgangs in Pressrichtung gegen eine Kraft verschiebbar ausgebildet. Die Begrenzungsplatte ist demnach aus einem starren Teilelement und einem lediglich in der Ebene des starren Teilelementes beweglichen Teilelement gebildet, wobei das bewegliche Teilelement, an Stiften geführt, gegen eine Federkraft in Richtung zum starren Teilelement gedrängt wird, wenn die aufgeschmolzenen Profilleisten gegeneinander gedrückt werden. Hierdurch soll während des Schweißens ein spaltfreier Zustand zwischen den Presskanten und den Leisten erreicht werden und der fließfähige, jedoch überschüssige Kunststoff nicht mehr zwischen den Presskanten der Leisten nach außen und damit nicht mehr an die Ober- und Unterseite der Profilstäbe gelangen.

Weiterhin sollen die Schweißraupen erst dann entfernt werden, wenn die Profilteile mit den angeschmolzenen Verbindungsflächen, also mit dem angeschmolzenen Schweißbereich, in Fügerichtung aufeinander zubewegt worden sind. Bei diesem Vorgehen ragen jedoch die Leisten nur mit einem fixen, individuell vorzugebenden Maß über die Gehrungskante der Begrenzungsplatten hinaus, wobei dieses vorzugebende Maß mit dem vorherigen Pressweg bei der Schweißung übereinzustimmen hat. Insofern muss für jeden Pressweg auch eine individuell herzustellende Begrenzungsplatte erzeugt werden. Somit ist ein immenser Aufwand auch hinsichtlich der Lagerhaltung an vorzuhaltenden Begrenzungsplatten, welche den individuellen Schweißaufgaben gerecht werden können, unvermeidbar. Auch die hohen Kosten zur Herstellung der jeweils individuell herzustellenden Begrenzungsplatte sind nicht zu vernachlässigen.

Es ist deshalb Aufgabe der vorliegenden Erfindung, ein verbessertes Verfahren und eine verbesserte Vorrichtung zum Verbinden von Kunststoffprofilteilen bereit zu stellen, die diese Nachteile vermeiden und zugleich den Austritt der Schmelze kontrollierbarer gestalten, so dass ein Nachbearbeiten und ein zusätzlicher konstruktiver Aufwand, wie beispielsweise verschiedene individuelle herzustellende Begrenzungsplatten, völlig oder zumindest teilweise entfallen kann.

Diese Aufgabe wird durch ein Verfahren mit den Merkmalen des Anspruchs 1 und einer Vorrichtung mit den Merkmalen des Anspruchs 12 gelöst. Vorteilhafte Ausgestaltungen ergeben sich aus den Unteransprüchen.

Bei dem erfindungsgemäßen Verfahren ist vorgesehen, dass das wenigstens eine Formelement mit dem Schweißapparat verbunden oder Teil des Schweißapparates ist, wobei das wenigstens eine Formelelement in der Arbeitsstellung mit dem zumindest einen Profilteil, insbesondere mit dem Schmelzgut in dem Schweißbereich, in Kontakt gebracht wird.

Mit dem erfindungsgemäßen Verfahren wird ein Austreten des Schmelzgutes nach außen, also auf die Sichtflächen der Profilteile, weitgehend oder vollständig unterbunden, so dass ein das ästhetische Erscheinungsbild des Fensterrahmens störender Schweißwulst nicht entsteht und ein Arbeitsschritt zur Entfernung der Schweißwulste sowie zum Kaschieren der entfernten Schweißwulste möglichst entfallen kann. Hierzu ist vorgesehen, dass das wenigstens eine Formelement mit dem bereits durch die Heizfläche des Schweißapparates angeschmolzenen Bereich der Profilteile in Kontakt gebracht wird. Das Formelement ist mit dem Schweißapparat, insbesondere mit einem Heizelement des Schweißapparates verbunden oder Teil des Schweißapparates beziehungsweise des Heizelementes. Hierdurch kann in vorteilhafter Weise der bereits angeschmolzene Bereich der Profilteile, das heißt der Schweißbereich, durch wenigstens ein Formelement nach Innen gedrückt werden, so dass eine unerwünscht große Schweißraupe bzw. ein unerwünscht großer Schweißwulst nach dem Fügen vermieden oder reduziert wird. Dadurch, dass das wenigstens eine Formelement mit dem Schweißapparat verbunden oder Teil des Schweißapparats ist, ist von vornherein gewährleistet, dass auch das Formelement noch vor dem Zusammenfügen der Profilteile zwischen die beiden Profilteile gefahren werden kann, d.h., wenn der Schweißapparat ausgefahren und zwischen die beiden Profilteile gefahren wird. Da die Beseitigung der Schweißwulste bzw. Schweißraupe vor dem Zusammenfügen der beiden Profilteile erfolgt, sind eine Nachbearbeitung der zusammengefügten Profilteile mit Werkzeugen oder zusätzliche Begrenzungselemente, wie sie im Stand der Technik vorgesehen sind, nicht mehr oder nur in deutlich geringerem Umfang notwendig.

Im Rahmen des erfindungsgemäßen Verfahrens werden also zunächst die beiden Profilteile eingerichtet, das heißt in eine Spannvorrichtung oder eine Vorrichtung zum Verbinden von zwei Kunststoffprofilteilen gespannt. Ist das Einrichten beendet, werden die Profilteile ein wenig zurückgefahren. Darin wird ein Schweißapparat, welcher insbesondere an einem Heizelement beidseitig Heizflächen aufweist, aus seiner Ausgangsstellung zwischen die beiden Profilteile gefahren, deren Stirnflächen gegenüberliegen und die vorzugsweise auf Gehrung geschnitten sind. Bei dem Schmelzbeginn werden die Profilteile in Kontakt mit der Heizfläche des Heizelementes gebracht. Das Heizelement ist jetzt in seiner Arbeitsstellung, und das Abschmelzen beginnt. Bei dem Abschmelzen werden die Stirnflächen der beiden Profilteile angeschmolzen. Das Formelement befindet sich jetzt noch in seiner Ausgangsstellung, das heißt, es ist noch nicht in Kontakt mit den angeschmolzenen Profilteilen.

Nachdem die Profilteile durch die Heizelemente des Schweißapparates angeschmolzen worden sind, wird der Schmelzprozess unterbrochen, das heißt der Kontakt zwischen den angeschmolzenen Profilteilen und dem Heizelement wird unterbrochen. Dies wird vorzugsweise dadurch erreicht, dass die Profilträger, das heißt der Arbeitstisch, auf dem die Profilteile gespannt sind, soweit aufgefahren werden, dass sich ein Abstand zwischen Heizelement und den angeschmolzenen Profilteilen einstellt.

Jetzt wird wenigstens ein Formelement, beispielsweise mittels eines Schweißarms, aus seiner Ausgangsstellung in seine Arbeitsstellung gebracht, das heißt das Formelement wird mit dem Schmelzgut der Profilteile im Schweißbereich in Kontakt gebracht, um das angeschmolzene Schweißgut von der Sichtfläche des Profilteils weg nach Innen in Richtung der späteren Fügefläche zu verschieben. Dieser Prozess kann mehrfach wiederholt werden, das heißt es kann erneut ein Schmelzprozess gestartet werden und die Formelemente können danach wieder mit dem entstehenden Schmelzgut der Profilteile im Schweißbereich in Kontakt gebracht werden, um Schmelzgut zu verschieben. Dabei kann vorgesehen sein, dass das wenigstens eine Formelement bei den einzelnen Durchgängen zu unterschiedlichen Arbeitsstellungen verfährt, beispielsweise kann das Formelement bei jedem weiteren Formvorgang zu einer größeren Formtiefe verfahren.

Eine vorteilhafte Ausgestaltung der Erfindung sieht vor, dass das wenigstens eine Formelement beheizt wird. Ein beheiztes Formelement hat den Vorteil, dass der angeschmolzene Bereich des Profilteils in dem Schweißbereich durch den Kontakt mit dem Formelement zum Umlegen des angeschmolzenen Schweißgutes nicht vorzeitig abkühlt, wodurch das Wegdrücken bzw. Verdrängen der Schweißwulste durch das Formelement erleichtert wird.

Die Formelemente können selbst mit einer Heizvorrichtung versehen sein. Es hat sich ebenso als zweckmäßig erwiesen, wenn die Formelemente durch die ohnehin beheizte Heizfläche des Schweißapparates erwärmt werden. Hierzu werden die Formelemente, zweckmäßigerweise bei einem Vorhub, vorzugsweise parallel zu der Heizfläche verfahren und an die Heizfläche angelegt, nachdem der Profilträger so weit aufgefahren worden ist, dass sowohl das Heizelement als auch die Formelemente zwischen die beiden Profilteile gefahren werden können.

Es ist dabei von Vorteil, wenn das wenigstens eine Formelement auf 80°C bis 280°C beheizt wird. Sehr gute Ergebnisse werden auch erzielt, wenn das wenigstens eine Formelement auf 140°C bis 210°C bzw. 160°C beheizt wird. Für eine besonders gute Wärmeübertragung bestehen die Formelemente im Wesentlichen aus einem Metall, insbesondere aus einer Metalllegierung. Hier haben sich Stahl-, Edelstahl- oder Aluminiumlegierungen als besonders vorteilhaft herausgestellt.

Die Erfindung sieht vor, dass das wenigstens eine Formelement zumindest in einer oder parallel Ebene zu der Heizfläche und/oder quer zu einer Auflagefläche für die Profilteile und/oder etwa quer zu einer Profiloberfläche des zumindest einen Profilteils, insbesondere quer zu dessen Sichtfläche bewegt wird. Durch eine derartige Bewegung wird erreicht, dass das von dem Formelement erfasste Schmelzgut direkt in das Innere der Profilteile gedrückt bzw. verdrängt werden kann. Alternativ können die Formelemente im Rahmen der Erfindung aber auch schräg oder parallel zur Oberfläche der Profilteile bewegt werden.

Eine weitere vorteilhafte Ausgestaltung der Erfindung sieht vor, dass das wenigstens eine Formelement wenigstens eine Formleiste aufweist, deren Formkontur zusätzlich an die Profilkontur des wenigstens einen Profilteils zumindest bereichsweise angepasst sein kann. Ferner können die Formleisten, die auch lösbar mit den Formelementen verbunden sein, so dass eine Anpassung an unterschiedliche Profilformen möglich ist. Die Formleisten können beispielsweise eine Aufnahmeleiste aufweisen, die die auswechselbare Formleiste hält. Dazu kann eine ineinandergreifende Nutführung an die Formleiste und die Aufnahmeleiste vorgesehen sein. Die Aufnahmeleiste kann beheizt sein und die Wärme auf die Formleisten übertragen. Die Anpassung der Formelemente bzw. der Formleisten an die Profilkontur des oder der Profilbauteile kann dergestalt erfolgen, dass eine Formkontur, insbesondere mit Ausnehmungen oder Vertiefungen zur abschnittsweisen Aufnahme des Profilbauteils vorgesehen ist. Zusätzlich kann zur Verbesserung des Fließverhaltens des Schmelzgutes ein Kantenbereich des Formelementes bzw. der Formleiste abgestumpft sein. Dies kann vorzugsweise dergestalt erfolgen, dass eine Fase, Ecke, Rundung oder ein Radius an der Kante der Formkontur vorgesehen ist.

Insbesondere bei einer Bewegung des Formelementes in Vertikalrichtung, das heißt bei einer Bewegung, die in etwa quer zu einer Oberfläche eines Profilteils erfolgt, kann das Formelement in das Schweißgut in dem angeschmolzenen Bereich des Profilteils eintauchen, so dass eine ausreichende Formtiefe für eine gewünschte Verdrängung des Schweißgutes erzielt wird. Die Formtiefe, also der Weg, den das Formelement in dem abgeschmolzenen Bereich zurücklegt, entspricht dem Abtrag bzw. der Verdrängung des Schmelzgutes, der ins Innere der Profilteile gedrückt bzw. verschoben wird.

Eine Variante der Erfindung sieht daher vor, dass das wenigstens eine Formelement in die Profiloberfläche des zumindest einen Profilteils, vorzugsweise in dessen Sichtfläche, insbesondere in den Schweißbereich mit dem angeschmolzenen Schmelzgut eintaucht. Die Formtiefe, das heißt auch der Grad des Eintauchens des Formelements in die Profiloberfläche ist vorgegeben und kann mechanisch eingerichtet sowie programmtechnisch hinterlegt werden.

Durch ein fortlaufend wiederholtes Anschmelzen der Profilteile im Schweißbereich mittels des Heizelementes und ein fortlaufend wiederholtes in Kontaktbringen der Formelemente mit den angeschmolzenen Bereichen der Profilteile, vorzugsweise zu unterschiedlichen, insbesondere zu größer werdenden Formtiefen, kann zudem im Rahmen der Erfindung erzielt werden, dass eine beim Zusammenfügen der Profilteile gegebenenfalls noch entstehende Schweißraupe unwesentlich ist.

Nach den wiederholten Formvorgängen durch die Formelemente erfolgt zweckmäßigerweise nach einem letzten Anschmelzen ein Umstellen zum Stauchen der Profilteile. Hierbei werden beide Profilteile mit ihren angeschmolzenen Stirnflächen aufeinander zubewegt, also aneinander gedrückt und somit gefügt, mit dem Ergebnis, dass kein Schweißwulst bzw. keine Schweißraupe mehr an der Sichtfläche der zusammengefügten Profilteile entsteht bzw. deren Ausprägung nur sehr klein ausfällt und damit auch optisch nicht stört.

Eine weitere Variante der Erfindung sieht vor, dass das wenigstens eine Formelement mechanisch, pneumatisch oder motorisch betrieben wird. Zur Bewegung der Formelemente, beispielsweise zur Ansteuerung unterschiedlicher Arbeitsstellungen, sind auch elektrische, elektromechanische, elektrohydraulische oder elektropneumatische Antriebe denkbar. Zur Steuerung der Bewegung der Formelemente können die Antriebe mit der ohnehin vorhandenen Zentralsteuerung der Vorrichtung, also des Schweißapparates, in Verbindung stehen. Natürlich kann auch eine separate Steuerung des entsprechenden Formelementes vorgesehen sein.
Gemäß einer besonderen Weiterbildung des erfindungsgemäßen Verfahrens kann vorgesehen sein, dass die Bewegung des wenigstens einen Formelementes mit einer Ein- und/oder Ausfahrbewegung der Profilteile sequentiell abgestimmt, gekoppelt oder überlagert ist. Auf diese Weise kann das angeschmolzene Schmelzgut, also die Schmelze, auch seitlich bezogen auf die Bewegung des jeweiligen Formteils verschoben werden, um bspw. eine stärkere Bearbeitung im Randbereich der Fügefläche zu erreichen.

Nach einer anderen besonderen Weiterbildung des erfindungsgemäßen Verfahrens kann die Bewegung des wenigstens einen Formelementes mit einem Vor- und/oder Rückhub des Schweißapparates sequentiell abgestimmt, gekoppelt oder überlagert sein, so dass ein Verdrängen der Schmelze in der Ebene der Formteilbewegung, jedoch quer zur Formteilbewegung erfolgen kann. Auf diese Weise können Profilteile mit erhabener Profilkontur noch besser bearbeitet werden.

Eine Vorrichtung zum Verbinden von Kunststoffprofilteilen, insbesondere eingerichtet zur Durchführung des erfindungsgemäßen Verfahrens, ist Gegenstand von Anspruch 12. Dabei sind wenigstens ein Profilteil und eine Heizfläche eines Schweißapparates, insbesondere eine Heizfläche eines Heizelements eines Schweißapparats, miteinander in Kontakt bringbar, um das wenigstens eine Profilteil in seinem Schweißbereich vor einem Zusammenfügen mit dem anderen Profilteil anzuschmelzen. Es ist wenigstens ein Formelement vorgesehen, mit dem ein Fließen und Verformen von Schmelzgut kontrollierbar und das aus einer Ausgangsstellung in Richtung zu einer Arbeitsstellung relativ zu dem zumindest einem Profilteil bewegbar ist. Die Vorrichtung zeichnet sich dadurch aus, dass das wenigstens eine Formelement mit dem Schweißapparat verbunden oder Teil des Schweißapparats ist, wobei das wenigstens eine Formelement in der Arbeitsstellung mit dem zumindest einem Profilteil, insbesondere mit dem Schmelzgut, in Kontakt bringbar ist. Zusätzlich kann vorgesehen sein, dass das Formelement und der Schweißapparat in der Weise mechanisch gekoppelt sind, dass die Bewegung des Formelementes zur Bearbeitung der Schmelze durch eine Bewegung des Schweißapparates ausgelöst wird.

Um Schmelzgut von beiden Profilteilen wegzudrücken bzw. wegzudrängen, sieht eine vorteilhafte Weiterentwicklung der Erfindung vor, dass das Heizelement zwei gegenüberliegend angeordnete Heizflächen aufweist, wobei jeder Heizfläche wenigstens ein Formelement zugeordnet ist. Hierdurch kann vorteilhafterweise erreicht werden, dass von vornherein ein größerer Schweißwulst bzw. eine größere Schweißraupe vermieden wird, da Schmelzgut von den Sichtflächen beider Profilteile entfernt wird. Hierfür können die Formelemente auf den gegenüberliegenden Seiten des Heizelementes synchron in die Arbeitsstellung bewegbar sein. Möglich ist es auch, die Formelemente unabhängig voneinander zu bewegen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung.

Es zeigen in schematischer Darstellung:
- Fig. 1: in einer perspektivischen Ansicht einen Teilausschnitt einer Vorrichtung zum Verbinden zweier Kunststoffprofilteile (beispielsweise in einem Parallelschubverfahren),
- Fig. 2 bis 5: prinzipielle Darstellungen aufeinanderfolgender Schritte zur Verbindung von Kunststoffprofilteilen gemäß der Vorrichtung aus Figur 1.

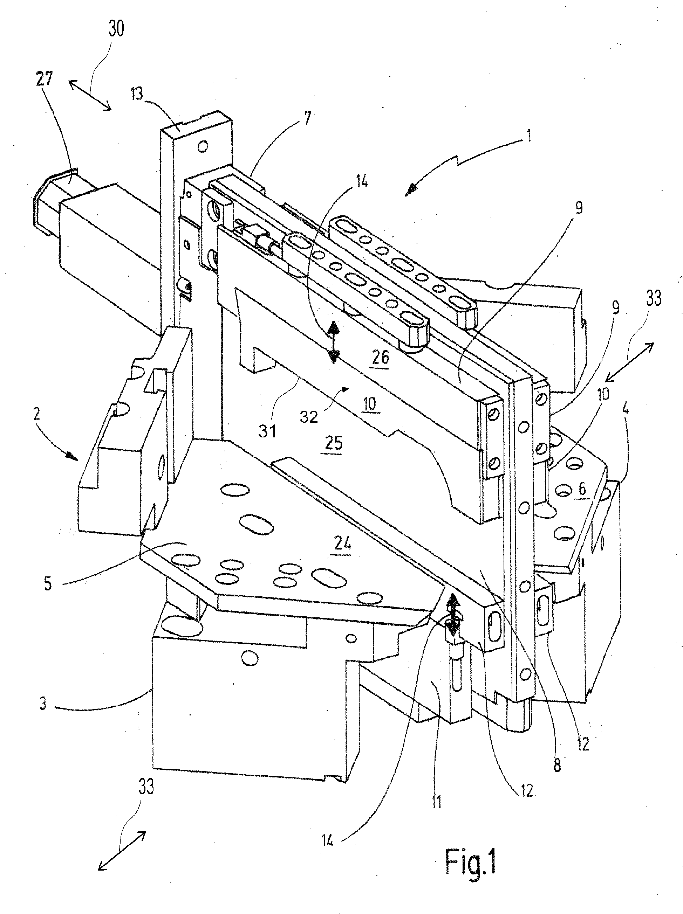

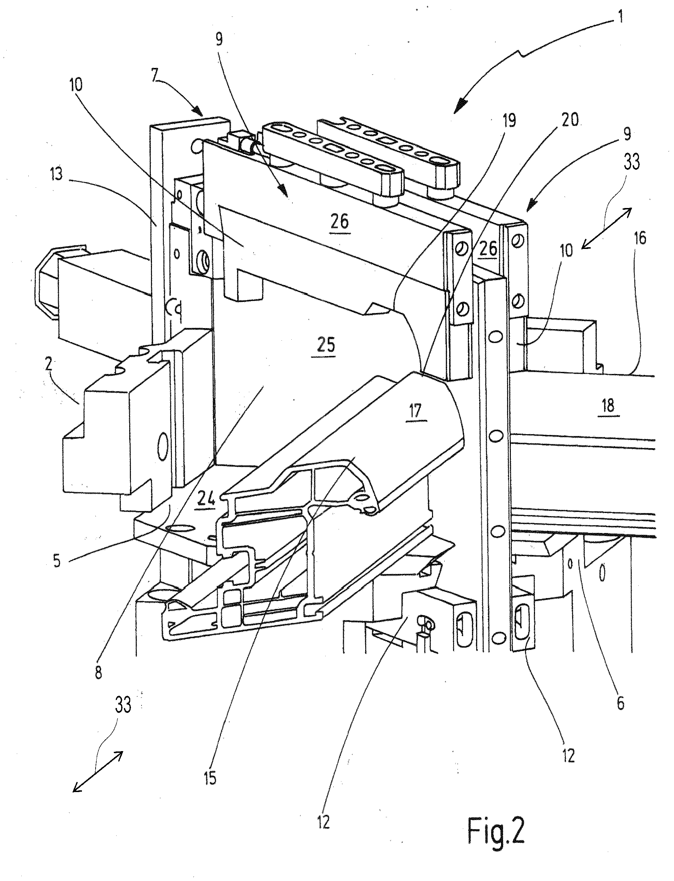

Figur 1 zeigt eine Vorrichtung 1 zum Verbinden von zwei in Figuren 2 bis 5 gezeigten Kunststoffprofilteilen 15, 16.

Die Vorrichtung 1 weist einen Arbeitstisch 2 auf, der wiederum aus zwei Teilvorrichtungen 3, 4 besteht. Wie aus Figur 1 weiter hervorgeht, sind die Teilvorrichtungen 3, 4 jeweils mit Profilträgern 5, 6 zum Einspannen von Profilteilen 15, 16 versehen. Die Profilträger 5, 6 bilden eine Auflagefläche 24 auf der die Profilteile 15, 16 mit Profilflächen aufliegen, welche in der Darstellung der Figuren 2, 3 und 5 verdeckt sind. In der in Figur 1 gezeigten Vorrichtung 1 sind die für das Einspannen der Profilteile 15, 16 vorgesehenen Spannwerkzeuge sowie andere bekannte Teileinrichtungen jedoch nicht dargestellt; grundsätzlich sind solche Teileinrichtungen beispielsweise aus der US 6,119,752 A oder WO2013/132406 A1 bekannt. Der Arbeitstisch 2 mit seinen Teilvorrichtungen 3, 4 ist so ausgebildet, dass die Teilvorrichtungen 3, 4 Ein- und Ausfahrbewegungen 33 aufeinander zu und voneinander weg vollziehen können. Bei einer Einfahrbewegung fahren die beiden Teilvorrichtungen 3, 4 bzw. die daran festgelegten Profilteile 15, 16 aufeinander zu, bei der Ausfahrbewegung fahren diese voneinander weg. In der konkreten Ausgestaltung des Arbeitstisches 2 kann dies nach dem Diagonalschubverfahren oder auch nach dem Parallelschubverfahren erfolgen.

Wie aus Figur 1 weiter hervorgeht, weist die Vorrichtung 1 einen Schweißapparat 7 auf, der über einen verfahrbaren Schweißarm 13 verfügt, an dem das Heizelement 8 angebracht ist. Das Heizelement 8 wird beispielsweise elektrisch betrieben. Die erforderliche elektrische Energie wird über einen Anschluss 27 zugeführt. Das Heizelement 8 ist beidseitig mit Heizflächen 25 versehen. Das in Figur 1 dargestellte Heizelement 8 befindet sich in einer Arbeitsstellung, das heißt, es befindet sich zwischen den Profilträgern 5, 6, die in Figur 1 soweit ausgefahren sind, dass das Heizelement 8 des Schweißapparates 7 zwischen die Profilträger 5, 6 gefahren werden kann. Das Heizelement 8 kann durch eine Rückhubbewegung aus dem Bereich zwischen den beiden Profilträgern 5, 6 herausgefahren werden, sodass es sich nicht mehr zwischen den Profilträgern 5, 6 befindet. Hierzu dient das insbesondere linear bewegliche Bauteil, der Schweißarm 13 der Vorrichtung 1, das mit bekannten Antrieben zum Beispiel linear bewegt werden kann, beispielsweise einen Vor- und Rückhub 30 ausführen kann, so dass das Heizelement 8 mittels des Schweißarms 13 zwischen die Profilträger 5, 6 vor und zurück gefahren werden kann.

Weiter weist der Schweißapparat 7 Formelemente 9, 11 auf, die mit dem Schweißapparat 7 beidseitig des Heizelements 8 angeordnet sind, ohne jedoch mit diesem direkt verbunden sein zu müssen, was auch möglich wäre.

In der in Figur 1 dargestellten Ausführungsform der Erfindung haben die Formelemente 9, 11 eine längliche, bis auf einen Endabschnitt rechteckige Form und sind im Vergleich zu der Heizplatte 8 schmal ausgebildet. Die Formelemente 9, 11 sind bei dem hier gewählten Ausführungsbeispiel etwa parallel zur Heizfläche 25 angeordnet und von der oberen Kante des Heizelementes 8 ein wenig nach unten versetzt.

Ein Bestandteil des Formelementes 9 ist, wie Figur 1 weiter verdeutlicht, eine lösbar an einer Aufnahmeleiste 26 des Formelementes 9 gehaltene Formleiste 10, die auf der der oberen Kante des Heizelementes 8 abgewandten Seite ausgebildet ist. Die Formleiste 10 weist eine Formkontur 19 auf, die an die Profilkontur 20 des jeweiligen Profilteils 15, 16 angepasst ist. Das bedeutet, dass die dem jeweiligen Profilteil 15, 16 zugewandte Fläche der Formleiste 10 mit Ausnehmungen oder Vertiefungen versehen ist, welche an die äußere Form der jeweiligen Profiloberfläche 17, 18 des zu bearbeitenden Profilteils 15, 16 angepasst ist bzw. ihr zumindest abschnittsweise folgt. An der der Heizfläche 25 abgewandten Seite 32 der jeweiligen Formleiste 10 weist die Formleiste 10 eine Bearbeitungskante 31 auf, mit welcher die Formleiste 10 bei der Bearbeitung an das angeschmolzene Schmelzgut bzw. die Schmelze angreift. In diesem Kantenbereich der Formleiste 10 kann die Formkontur 19 abgestumpft sein. Das bedeutet, dass der Übergang zwischen der unteren Fläche und der Seitenfläche der Formleiste 10 einen Übergang mit einem Winkel von weniger als 90° aufweist. Beispielsweise kann dies durch das Vorsehen einer Fase, eines Radius, einer Rundung oder durch einen anderen stumpfen Übergang erreicht werden, um das Fließverhalten des angeschmolzenen Schweißgutes zu verbessern.

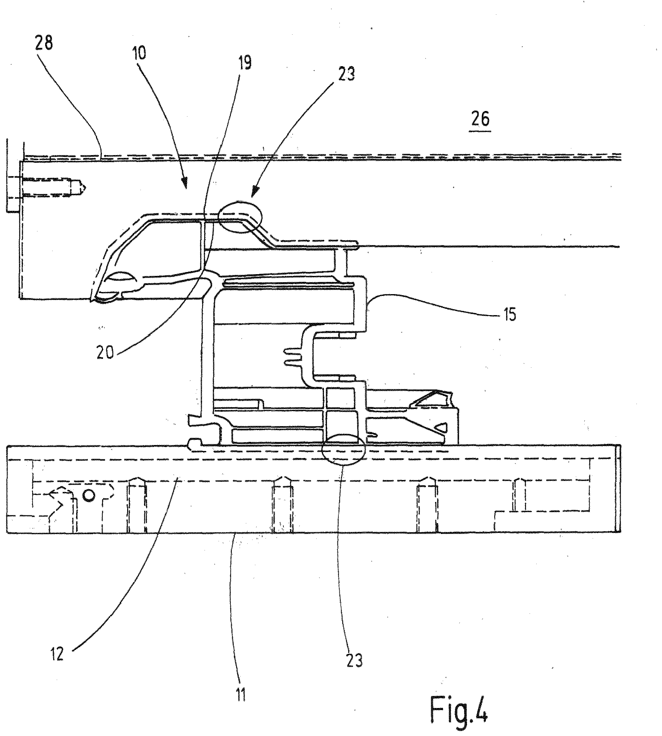

Die Formleiste 10 ist an der Aufnahmeleiste 26 mittels einer ineinandergreifenden Nutführung 28 gehalten. Die Nutführung 28 ist in der Figur 4 skizziert und stellt eine besonders vorteilhafte Möglichkeit dar, eine lösbare Verbindung zwischen der Formleiste 10 und der Aufnahmeleiste 26 herzustellen. Hierdurch kann ein verschließbedingtes Auswechseln der Formleisten 10 erfolgen. Möglich ist hierbei auch, bei einem Wechsel des zu bearbeitenden Profiltyps die Formleiste 10 auszutauschen. Die Formleiste 10 und die Aufnahmeleiste 26, welche wiederum mit einem Aktuator zum Erzeugen einer Bewegung verbunden ist, können auch einteilig ausgebildet sein. Weitere Formelemente 11 mit in diesem Fall eben ausgebildeten Formleisten 12 befinden sich im unteren Bereich des Schweißapparates 7 und sind mit dem Schweißapparat 7 ebenfalls verbunden. Die Formelemente 11 mit den Formleisten 12 befinden sich beidseitig des Heizelementes 8.

Wie aus Figur 1 weiter erkennbar ist, schließen die Formleisten 12 in der Ausgangsstellung nicht bündig mit der durch die Oberflächen der Profilträger 5, 6 gebildeten Auflagefläche 24 ab, sondern sind gegenüber dieser zurückgesetzt. Die Formleisten 12 sind von einer länglichen rechteckigen Form, erstrecken sich in Längsrichtung des Heizelementes 8 und sind auf diese Weise an eine ebene Profiloberfläche angepasst. Die Formelemente 9, 11 sind mit ihren Formleisten 10, 12, wie Figur 1 weiter verdeutlicht, etwa parallel zu der Heizfläche 25 und somit vertikal bzw. etwa quer zu einer Profiloberfläche 17, 18 der in Figur 1 nicht gezeigten Profilteile 15, 16 bewegbar. Die Bewegung der Formelemente 9, 11 erfolgt in diesem Sinne also quer zur Auflagefläche 24. Die Formelemente 9, 11 können somit einen durch den Doppelpfeil 14 veranschaulichten Ab- und Aufwärtshub ausführen. Dies erfolgt unabhängig von der Bewegung des Heizelementes 8, das mittels des Schweißarms 13 zwischen die Profilträger 5, 6 gefahren werden kann. Zur Steuerung der Bewegungswege der Formelemente 9, 11 können Antriebe mit der ohnehin vorhandenen zentralen Steuerung des Schweißapparates 7 in Verbindung stehen. Alternativ kann auch eine separate Steuerung vorgesehen sein.

Durch ihre Anordnung in unmittelbarer Nähe der Heizfläche 25 bzw. des Heizelementes 8 werden die Formelemente 9, 11 durch das Heizelement 8 etwa auf die Temperatur des Heizelementes beheizt. Bei Kontakt zwischen Formelement 9, 11 und Schmelzgut kann auf diese Weise ein vorzeitiges Erkalten des angeschmolzenen Kunststoffmaterials oder eine Anhaftung an den Formelementen 9, 11 weitgehend vermieden werden. Denkbar ist jedoch auch, die Formelemente mit einer eigenen Heizvorrichtung zu versehen. Dabei kann zur indirekten Beheizung der Formelemente 9, 11 mit ihren Formleisten 10, 12 auch vorgesehen sein, dass die Aufnahmeleisten 26 selbst beheizt sind und die Formleisten 10, 12 über ihren mechanischen Kontakt beheizen. Die Formelemente 9, 11 bestehen im vorliegenden Ausführungsbeispiel aus einer Aluminiumlegierung.

In Figur 2 ist den Profilträgern 5, 6 jeweils ein Profilteil 15, 16 zugeordnet, wobei auch in Figur 2 die hierfür vorgesehenen Spannwerkzeuge nicht dargestellt sind. Auch in Figur 2 ist das Heizelement 8 zwischen die beiden Profilträger 5, 6 eingefahren worden. Allerdings sind jetzt die beiden Profilträger 5, 6 in der Richtung des Heizelementes 8 so weit eingefahren, dass deren Stirnflächen mit den Heizflächen des Heizelementes 8 in Kontakt sind. Das Anschmelzen kann nun beginnen. Bei dem Anschmelzen werden die Stirnflächen, zumindest aber die abgelängten Enden der beiden Profilteile 15, 16 gegen die Heizflächen 25 des Heizelementes 8 gedrückt und angeschmolzen. Während des Anschmelzens sind die Formelemente 9,11 mit ihren Formleisten 10, 12 jedoch nicht notwendigerweise in Kontakt mit den Profilteilen 15, 16. Während des Anschmelzens der Profilteile 15, 16 durch das Heizelement 8 sind die Formelemente 9, 11 mit ihren Formleisten 10, 12 in ihrer Ausgangsstellung. Dabei befinden sich die Formelemente 9, 11 mit ihren Formleisten 10, 12 ober- und unterhalb der Profilteile 15, 16 und sind von diesen beabstandet angeordnet. Während des Anschmelzens können jedoch zusätzliche, in den Figuren nicht gezeigte Begrenzungsmesser an dem jeweiligen Profilteil 15, 16 anliegen, um ein Fließen der beim Anschmelzen erzeugten Schmelze zu kontrollieren und somit den Austritt von Schmelze auf die Profiloberflächen, 17, 18, bspw. auf die Sichtflächen, zu begrenzen.

Wie aus Figur 2 weiter hervorgeht, ist die untere Formkontur 19 der Formleiste 10, also die Formkontur 19, die den Oberflächen 17, 18 der Profilträger 15, 16 zugewandt ist, nicht gradlinig ausgebildet, sondern der Profilkontur 20 der Profilteile 15, 16 angepasst. Die Formkontur 19 der unteren Formleiste 12 hat dagegen, wie auch Figur 1 verdeutlicht, eine ebene Gestalt und ist der den Profilträgern 5, 6 zugewandten Oberfläche der Profilteile 15, 16 angepasst.

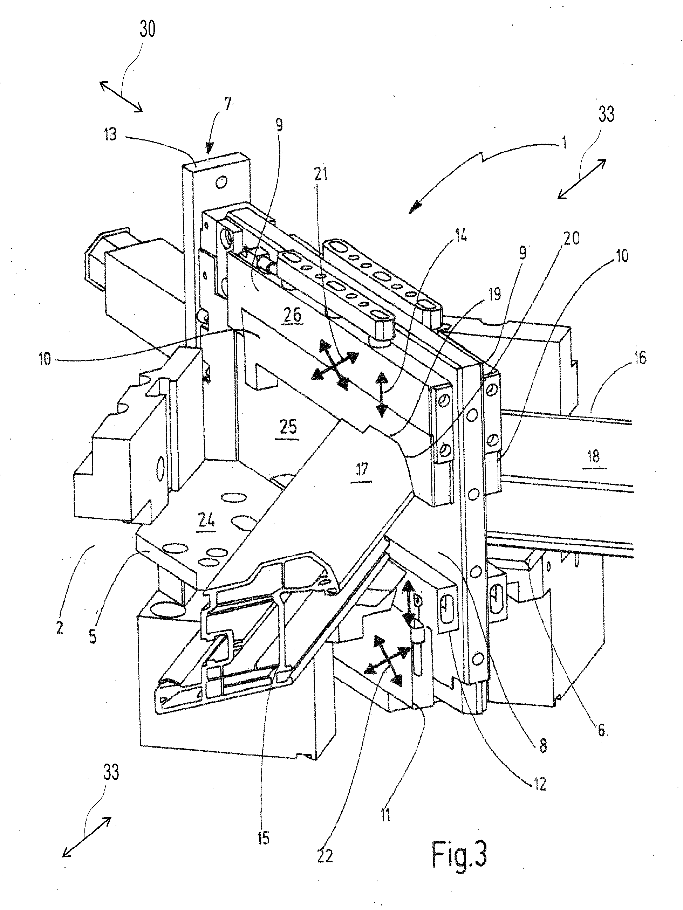

Bei dem in Figur 3 gezeigten Zustand ist das Anschmelzen der Profilteile 15, 16 beendet. Die Profilteile 15, 16 sind jetzt erstmalig angeschmolzen und von der Heizfläche 25 zurückgezogen. Nunmehr beginnt der Prozess des Formens, das heißt der Vorgang des Verdrängens bzw. Wegdrückens von Schmelzgut in das Innere in Richtung der späteren Fügefläche der Profilteile 15, 16, um einen nach außen über die Profilsichtfläche, bspw. Profiloberflächen 17, 18, vorstehenden Schweißwulst bzw. eine Schweißraupe zu vermeiden, oder zumindest zu verringern. In diesem Zustand sind die Profilträger 5, 6 wieder ein Stück von dem Heizelement 8 zurückgefahren, so dass das Heizelement 8 beabstandet von den beiden Profilträgern 5, 6 und somit von den Profilteilen 15, 16 angeordnet ist. Ersichtlich ist, dass in dem in Figur 3 gezeigten Zustand die zwischenzeitlich beheizten Formelemente 9, 11 mit ihren zwischenzeitlich beheizten Formleisten 10, 12 mittels einer Vertikalbewegung, d.h. mittels des durch den Doppelpfeil 14 dargestellten Abwärtshubs und Aufwärtshubs, in Richtung der Profilteile 15, 16 gefahren sind. Hierdurch stehen die Formleisten 10, 12 mit den Profilteilen 15,16, also mit daran befindlichem angeschmolzenen Schmelzgut in Kontakt, um dieses zu verschieben. Bei dieser Bewegung sind die Formelemente 9, 11 auf den gegenüberliegenden Seiten des Heizelementes 8 synchron in ihre Arbeitsstellung bewegt worden. Möglich ist jedoch auch, die Formelemente 9, 11 unabhängig voneinander zu bewegen. Wie die zweifachen Doppelpfeile 21, 22 in Figur 3 verdeutlichen, können die Formelemente 9, 11 mit ihren Formleisten 10, 12 auch parallel oder schräg zu den Oberflächen 17, 18 der Profilteile 15, 16 bewegt werden. Beispielsweise kann dies in der Weise erfolgen, dass der Vertikalbewegung 14 eine Vor- und/oder Rückhubbewegung 30 des Schweißarms 13 zumindest zeitweise überlagert wird oder die Vertikalbewegung 14 und die Vor- und/oder Rückhubbewegung sequentiell erfolgen. Gleiches ist in Kombination mit einer Ein- und/oder Ausfahrbewegung 33 der Teilvorrichtungen 3, 4 des Arbeitstisches möglich, so dass sich die jeweilige Formleiste 10 mit fortschreitender Vertikalbewegung 14 gleichzeitig oder sequentiell von dem Profilteil 15, 16 weg- oder darauf zubewegt, um die Schmelze nicht nur vertikal sondern auch zur Seite, also in die oder aus der Ebene der Fügefläche des Profilteils 15, 16 zu verdrängen.

Während des Kontaktes zwischen den Formleisten 10, 12 und den Profilteilen 15, 16 wird, wie aus der Seitenansicht in Figur 4 hervorgeht, eine Formtiefe 23 erreicht. Dies bedeutet, dass die Formelemente 9, 11 mittels des Abwärts- und Aufwärtshubs soweit in das Schmelzgut der Profilteile 15, 16 eingetaucht sind, dass ein Teil des Schmelzgutes zur Vermeidung eines Schweißwulstes bzw. einer Schweißraupe in das Innere der Profilteile 15, 16 gedrängt werden kann.

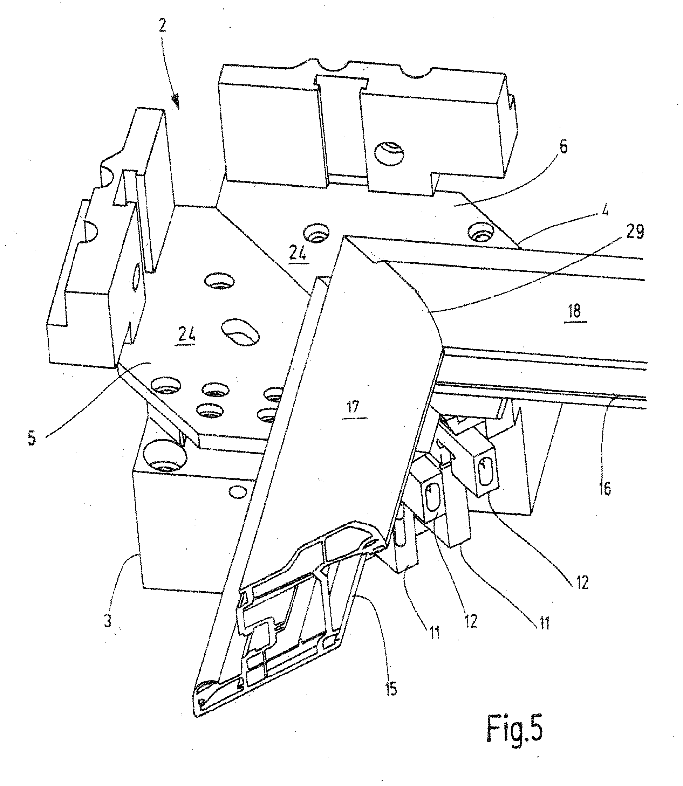

Figur 5 zeigt schließlich die durch Stauchen zusammengefügten Profilteile 15, 16 auf der Auflagefläche 24 der Profilträger 5, 6 des Arbeitstisches 2, nachdem die Profilteile 8, 6 erneut in dem Schweißbereich angeschmolzen und danach zusammengefügt wurden. Das in Figur 5 aus dem Bereich zwischen der Profilträgern 5, 6 entformte und daher nicht gezeigte Heizelement 8 ist zwischenzeitlich durch Ausführung eines Rückhubs eingefahren worden, um eine durch Einfahren der Profilträger 5, 6 bzw. der Teilvorrichtungen 3,4 erzeugte Fügebewegung der Profilteile 5, 6 zum Aneinanderfügen der in ihrem Schweißbereich angeschmolzenen Profilteile 15, 16 zu ermöglichen. Mit dem erfindungsgemäßen Verfahren ist eine Nachbearbeitung hinsichtlich des bisher erforderlichen Entfernens der ansonsten an den Profilteilen 15, 16 sich bildenden Schweißraupen bzw. Schweißwulste hinfällig geworden oder kann zumindest mit weniger Aufwand betrieben werden.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei anders gearteten Ausführungen Gebrauch machen. Beispielsweise kann von einer Vertikalbewegung der Formelemente 9, 11 abgesehen werden, und die Formelemente 9, 11 können aus ihrer Ausgangsstellung auch schräg in ihre Arbeitsstellung gefahren werden.

Ferner kann das Verfahren auch in der Weise erweitert werden, dass das Anschmelzen der Profilenden an der jeweiligen Heizfläche 25, gefolgt von dem Formungsschritt mittels der Formelemente 9, 11 mehrfach wiederholt wird, wobei dabei unterschiedliche Arbeitsstellungen der Formelemente 9, 11 für unterschiedliche Formtiefe 23 angefahren werden können.

Die als Ein- und Ausfahrbewegung 33 vorliegende Relativbewegung zwischen den Profilträgern 5, 6 kann in unterschiedlichen Richtungen zueinander erfolgen, je nachdem ob die Profilteile 15, 16 unter einem Winkel zueinander oder stumpf aufeinander geschweißt werden sollen, und ob in einer einzigen Vorrichtung mehr als zwei Profilteile 15, 16 gleichzeitig bearbeitet werden sollen.

Die Ablängung der Profilteile 15, 16 kann, wie in dem vorstehend beschriebenen Beispiel unter einem Gehrungswinkel geschehen. Es ist jedoch auch möglich, dass Profilteile stumpf aneinander geschweißt werden oder aber in einem Winkel von 90° rechtwinklig gefügt werden sollen. In all diesen Fällen ist die Verwendung der erfindungsgemäßen Formelemente möglich.

### Bezugszeichenliste

| | | | |
|---|---|---|---|
| 1 | Vorrichtung | 19 | Formkontur |
| 2 | Arbeitstisch | 20 | Profilkontur |
| 3 | Teilvorrichtung | 21 | Zweifacher Doppelpfeil |
| 4 | Teilvorrichtung | 22 | Zweifacher Doppelpfeil |
| 5 | Profilträger | 23 | Formtiefe |
| 6 | Profilträger | 24 | Auflagefläche |
| 7 | Schweißapparat | 25 | Heizfläche |
| 8 | Heizelement | 26 | Aufnahmeleiste |
| 9 | Formelement | 27 | Elektroanschluss |
| 10 | Formleiste | 28 | Nutführung |
| 11 | Formelement | 29 | Fügestelle |
| 12 | Formleiste | 30 | Vor- und Rückhub |
| 13 | Schweißarm | 31 | Bearbeitungskante |
| 14 | Doppelpfeil | 32 | Abgewandte Seite |
| 15 | Profilteil | 33 | Ein- und Ausfahrbewegung |
| 16 | Profilteil | | |
| 17 | Profiloberfläche | | |
| 18 | Profiloberfläche | | |

## Patentansprüche

1. Verfahren zum Verbinden von Kunststoffprofilteilen, bei dem wenigstens ein Profilteil (15,16) und eine Heizfläche (25) eines Schweißapparats (7) miteinander in Kontakt gebracht werden, um das wenigstens eine Profilteil (15,16) in seinem Schweißbereich vor einem Zusammenfügen mit dem anderen Profilteil (15, 16) anzuschmelzen, wobei wenigstens ein Formelement (9, 11) aus einer Ausgangsstellung in Richtung zu einer Arbeitsstellung relativ zu dem zumindest einen Profilteil (15, 16) bewegt wird, um ein Fließen und Verformen von Schmelzgut in dem Schweißbereich zu kontrollieren, **dadurch gekennzeichnet, dass** das wenigstens eine Formelement (9, 11) mit dem Schweißapparat (7) verbunden oder Teil des Schweißapparats (7) ist, wobei nach dem Anschmelzen das wenigstens eine Formelement (9, 11) in der Arbeitsstellung mit dem zumindest einen Profilteil (15, 16) und dem angeschmolzenen Schmelzgut in dem Schweißbereich in Kontakt gebracht wird,. um es von einer Sichtfläche des Profilteils (15, 16) weg nach innen in Richtung der späteren Fügefläche zu verschieben.

2. Verfahren nach Anspruch 1, **dadurch gekennzeichnet, dass** das wenigstens eine Formelement (9,11) beheizt wird.

3. Verfahren nach Anspruch 1 oder 2, **dadurch gekennzeichnet, dass** das Verschieben des angeschmolzenen Schmelzgutes erfolgt, indem das wenigstens eine Formelement (9, 11) zumindest in einer Ebene oder parallel zu der Heizfläche (25) und/oder quer zu einer Auflagefläche (24) für die Profilteile (15, 16) und/oder etwa quer zu einer Profiloberfläche (17, 18) des zumindest einen Profilteils (15, 16), insbesondere quer zu dessen Sichtfläche, bewegt wird.

4. Verfahren nach Anspruch 1 bis 3, **dadurch gekennzeichnet, dass** das wenigstens eine Formelement (9, 11) aus der Arbeitsstellung zurück in Richtung zur Ausgangsstellung bewegt wird, wobei das zumindest eine Profilteil (15, 16) mittels des Heizelements (8) erneut oder wiederholt erwärmt wird, wenn das wenigstens eine Formelement (9, 11) die Ausgangsstellung erreicht hat, wobei vorzugsweise das wenigstens eine Formelement (9, 11) erneut in die Arbeitsstellung bewegt wird, insbesondere in eine Arbeitsstellung mit einer größeren Formtiefe (23).

5. Verfahren nach einem der vorhergehenden Ansprüche, **dadurch gekennzeichnet, dass** das wenigstens eine Formelement (9,11) beheizt wird, vorzugsweise auf 80° C bis 280° C, bevorzugt auf 140°C bis 210°C, besonders bevorzugt auf 160°C.

6. Verfahren nach einem der vorhergehenden Ansprüche, **dadurch gekennzeichnet, dass** wenigstens zwei Formelemente (9, 11) auf den gegenüberliegenden Seiten des Heizelementes (8) und/oder des Profilteils (15, 16) synchron oder unabhängig voneinander in die Arbeitsstellung bewegt werden.

7. Verfahren nach einem der vorhergehenden Ansprüche, **dadurch gekennzeichnet, dass** das wenigstens eine Formelelement (9, 11) in die Profiloberfläche (17, 18) des zumindest einen Profilteils (15, 16), vorzugsweise in dessen Sichtfläche, insbesondere in den Schweißbereich mit dem angeschmolzenen Schmelzgut eintaucht.

8. Verfahren nach einem der vorhergehenden Ansprüche, **dadurch gekennzeichnet, dass** der Schweißapparat (7) ein Heizelement (8) aufweist, das nach dem Anschmelzen von den Profilteilen (15, 16) entfernt wird oder von dem die Profilteile (15, 16) nach dem Anschmelzen entfernt werden.

9. Verfahren nach Anspruch 7, **dadurch gekennzeichnet, dass** während des Kontakts zwischen dem wenigstens einen Formelement (9, 11) und des zumindest einen Profilteils (15, 16) das Heizelement (8) von dem zumindest einen Profilteil (15, 16) beabstandet angeordnet ist.

10. Verfahren nach einem der vorhergehenden Ansprüche, **dadurch gekennzeichnet, dass** das wenigstens eine Formelelement (9, 11) mechanisch, pneumatisch oder motorisch betrieben wird.

11. Verfahren nach einem der vorhergehenden Ansprüche, **dadurch gekennzeichnet, dass** die Bewegung des wenigstens einen Formelementes (9, 11) mit einer Ein- und/oder Ausfahrbewegung (33) der Profilteile (15, 16) sequentiell abgestimmt, gekoppelt oder überlagert ist und/oder dass die Bewegung des wenigstens einen Formelementes (9, 11) mit einem Vor- und/oder Rückhub (30) des Schweißapparates (7) sequentiell abgestimmt, gekoppelt oder überlagert ist.

12. Vorrichtung zum Verbinden von Kunststoffprofilteilen, insbesondere zur Durchführung des Verfahrens nach einem der vorhergehenden Ansprüche zum Verbinden von Kunststoffprofilteilen, wobei wenigstens ein Profilteil (15, 16) und eine Heizfläche (25) eines Schweißapparats (7) miteinander in Kontakt bringbar sind, um das wenigstens eine Profilteil (15, 16) in seinem Schweißbereich vor einem Zusammenfügen mit dem anderen Profilteil (15, 16) anzuschmelzen, und wobei wenigstens ein Formelement (9, 11) vorgesehen ist, mit dem ein Fließen und Verformen von Schmelzgut kontrollierbar ist und das aus einer Ausgangsstellung in Richtung zu einer Arbeitsstellung relativ zu dem zumindest einen Profilteil (15, 16) bewegbar ist, **dadurch gekennzeichnet, dass** das wenigstens eine Formelement (9,11) mit dem Schweißapparat (7) verbunden oder Teil des Schweißapparats (7) ist, wobei das wenigstens eine Formelement (9, 11) in der Arbeitsstellung mit dem zumindest einen Profilteil (15, 16) mit dem angeschmolzenen Schmelzgut in Kontakt bringbar ist, um es von einer Sichtfläche des Profilteils (15, 16) weg nach innen in Richtung der späteren Fügefläche zu verschieben.

13. Vorrichtung nach Anspruch 12, **dadurch gekennzeichnet, dass** das wenigstens eine Formelement (9, 11) beheizbar ist, insbesondere durch Anordnung an der Heizfläche (25) des Schweißapparates (7) beheizbar ist, wobei das wenigstens eine Formelement (9, 11) vorzugsweise auf 80° C bis 280° C, bevorzugt auf 140°C bis 210°C, besonders bevorzugt auf 160°C beheizbar ist.

14. Vorrichtung nach Anspruch 12 oder 13, **dadurch gekennzeichnet, dass** das wenigstens ein Formelement (9, 11) zum Verschieben des angeschmolzenen Schmelzgutes in einer Ebene oder parallel zu der Heizfläche (25) und/oder quer zu einer Auflagenfläche (24) für die Profilteile (15, 16) und/oder zumindest etwa quer zu einer Profiloberfläche (17, 18) des zumindest einen Profilteils (15, 16), insbesondere zu dessen Sichtfläche bewegbar ist.

15. Vorrichtung nach einem der Ansprüche 12 bis 14, **dadurch gekennzeichnet, dass** das wenigstens eine Formelement (9, 11) eine wenigstens bereichsweise an die Profilkontur (20) des zumindest einen Profilteils (15, 16) angepasste Formkontur (19) aufweist.

16. Vorrichtung nach einem der Ansprüche 12 bis 15, **dadurch gekennzeichnet, dass** die Formkontur (19) in einem Kantenbereich wenigstens bereichsweise abgestumpft ist, insbesondere durch eine Rundung, eine Fase oder einen Radius.

17. Vorrichtung nach einem der Anspruch 12 bis 16, **dadurch gekennzeichnet, dass** das wenigstens eine Formelement (9, 11) wenigstens eine an ihr lösbar befestigte Formleiste (10, 12) mit einer Formkontur (19) aufweist, die vorzugsweise an die Profilkontur (20) des zumindest einen Profilteils (15, 16) wenigstens bereichsweise angepasst ist.

18. Vorrichtung nach einem der Ansprüche 12 bis 17, **dadurch gekennzeichnet, dass** das Formelement (9, 11) im Wesentlichen aus einem Metall, insbesondere einer Stahl- oder Aluminiumlegierung besteht.

19. Vorrichtung nach einem der Ansprüche 12 bis 18, **dadurch gekennzeichnet, dass** das wenigstens eine Formelement (9, 11) parallel zur Heizfläche (25) und/oder quer zu einer Auflagefläche (24) für die Profilteile (15, 16) bewegbar ist, so dass eine Bewegung des Formelementes (9, 11) etwa quer zu einer Profiloberfläche (17, 18) des zumindest einen Profilteils (15, 16), insbesondere quer zu dessen Sichtfläche erfolgen kann.

20. Vorrichtung nach einem der Ansprüche 12 bis 19, **dadurch gekennzeichnet, dass** das wenigstens eine Formelement (9, 11) mechanisch, pneumatisch oder motorisch betrieben ist.

21. Vorrichtung nach einem der Ansprüche 12 bis 20, **dadurch gekennzeichnet, dass** der Schweißapparat (7) zwei gegenüberliegend angeordnete Heizflächen (25) aufweist, wobei jeder Heizfläche (25) wenigstens ein Formelement (9, 11) zugeordnet ist.
